## Europäisches Patentamt
## European Patent Office
## Office européen des brevets

(11) Veröffentlichungsnummer: **0 421 111 A2**

# EUROPÄISCHE PATENTANMELDUNG

(21) Anmeldenummer: **90116236.2**

(22) Anmeldetag: **24.08.90**

(51) Int. Cl.5: **G01F 1/80**

(30) Priorität: **06.10.89 DE 3933472**

(43) Veröffentlichungstag der Anmeldung:
**10.04.91 Patentblatt 91/15**

(84) Benannte Vertragsstaaten:
**AT CH DE DK ES FR GB IT LI NL SE**

(71) Anmelder: **CARL SCHENCK AG**
**Landwehrstrasse 55 Postfach 40 18**
**W-6100 Darmstadt(DE)**

(72) Erfinder: **Kronmüller, Heinz, Prof. Dr.**
**Steinhofstrasse 48**
**W-7500 Karlsruhe(DE)**
Erfinder: **Hagenmeyer, Heinrich**
**Stresemannstrasse 39 a**
**W-7500 Karlsruhe(DE)**

(74) Vertreter: **Brandt, Ernst-Ulrich**
**Fa. Carl Schenck AG Patentabteilung**
**Landwehrstrasse 55 Postfach 40 18**
**W-6100 Darmstadt 1(DE)**

(54) **Messeinrichtung zum Bestimmem der Förderstärke von Massengütern.**

(57) Meßeinrichtung zur Durchführung des Verfahrens zum Bestimmen der Förderstärke von Massengütern, bei der die Massengüter über eine Fördereinrichtung kontinuierlich transportiert werden, die mit einer Antriebseinrichtung versehen ist. Dabei wird die Fördervorrichtung mit einem bestimmbaren Hub periodisch senkrecht zur Fördervorrichtung bewegt. Während des Hubvorgangs wird durch eine Kraftmeßvorrichtung die Hubkraft gemessen. Gleichzeitig wird durch eine Sensorvorrichtung die Hubgeschwindigkeit erfaßt, wobei in einer Auswerteeinrichtung durch einen Rechenvorgang aus dem Hubgeschwindigkeitssignal und dem Hubkraftsignal die Förderstärke errechnet wird. In der Auswerteeinrichtung wird die periodische Hubkraft mit der periodischen Hubgeschwindigkeit moduliert und dieses Ausgangssignal über die Zeit integriert. Die dabei gemessenen Trägheitskräfte, die aus der Antriebsgeschwindigkeit herrühren (Korioliskraft), ergeben bei der Integration des Ausgangssignals über eine ganze Anzahl von Perioden einen Wert, der der Förderstärke entspricht.

## MESSEINRICHTUNG ZUM BESTIMMEN DER FÖRDERSTÄRKE VON MASSENGÜTERN

Die Erfindung betrifft ein Verfahren zur Bestimmung der Förderstärke gemäß dem Oberbegriff des Patentanspruchs 1 und eine Meßeinrichtung zur Durchführung des Verfahrens gemäß dem Oberbegriff des Patentanspruchs 1.

Ein derartiges Verfahren und eine Meßeinrichtung dazu ist aus der DE-PS 33 46 145 vorbekannt. In dieser Schrift wird eine Meßvorrichtung beschrieben, die die Förderstärke nach dem Coriolis-Prinzip ermittelt. Dabei wird die wirksame Trägheitskraft ausgenutzt, die bei der Kopplung eines bewegten Masseteilchens mit einem sich drehenden Bezugskörper auftritt. Bei dieser Massenflußmeßeinrichtung wird der zu messende Materialstrom auf ein Flügelrad geleitet, welches von einem Elektromotor mit konstanter Drehzahl angetrieben wird. Dabei ist das am Motor aufzubringende Antriebs-Drehmoment von dem Massenstrom des jeweils durch das Flügelrad zu befördernden Materialstroms abhängig. Um dieses Antriebsdrehmoment messen zu können, wurde der Antriebsmotor drehbar gelagert aufgehängt und gegen eine Kraftmeßzelle abgestützt. Die von der Kraftmeßzelle aufgenommene Kraft stellt dabei ein Maß für die augenblickliche Förderstärke dar. Ein derartiges Verfahren und die Einrichtung dazu hat den Nachteil, daß durch die Rotationsbeförderung des Schüttgutes das Flügelrad als Fördervorrichtung stark von der Form des Schüttgutes abhängig ist und nur durch deren Abstimmung ein hinreichend zuverlässiges Meßergebnis erzielbar ist.

Aus der EP 0 151 638 ist ein Massendurchflußverfahren für Flüssigkeiten bekannt. Diese Schrift beschreibt ein Verfahren, bei dem die zu messende Flüssigkeit durch eine Rohrschleife fließt, die um eine Drehachse bewegt wird. Dadurch entstehen unter dem Einfluß der um die Drehachse stattfindenden Drehschwingungen in einem Querschenkel Korioliskräfte, deren Größe dem jeweiligen Durchfluß proportional ist und die dem Querschenkel entgegen der Schwingbewegung auslenkt, wodurch eine Verbiegung der Rohrschleife entsteht. Dieses Verfahren hat den Nachteil, daß es praktisch nur für flüssige Massengüter geeignet ist. Bei Massengütern in Form von Schüttgütern, die nicht flüssig sind, kann die Durchflußmenge mit hinreichender Genauigkeit bei diesem Verfahren nicht bestimmt werden.

Der Erfindung liegt deshalb die Aufgabe zugrunde, ein Verfahren und eine Meßeinrichtung zur Ermittlung der Förderstärke der eingangs genannten Art zu schaffen, mit der die Förderstärke nahezu aller Arten von Massengütern gleich gut ermittelt werden kann und das unter einfachster Ausgestaltung.

Diese Aufgabe wird durch die in den Patentansprüchen 1 und 2 angegebene Erfindung gelöst. Weiterbildungen und vorteilhafte Ausführungsbeispiele der Erfindung sind in den Unteransprüchen angegeben.

Meist basierten bisher Massendurchflußmesseinrichtungen nach dem Coriolis-Prinzip auf dem Grundgedanken, daß ein bewegter Körper in einem rotierenden Bezugssystem neben der Zentrifugalkraft eine senkrecht dazu angreifende Trägheitskraft (Coriolis-Kraft) erfährt. Deshalb wurde bisher beim Feststellen des Massendurchflusses von festen Massengütern (Schüttgütern) meist ein angetriebenes Meßrad benutzt, auf das der Massenstrom geleitet wurde, wobei dann die Antriebskraft ein Maß für den Massendurchfluß darstellte.

Der Grundgedanke der Erfindung besteht nun darin, einen Teil eines Massenflußsystems periodisch so anzutreiben, daß das zu messende Gut mit einem festlegbaren Drehwinkel und mit einer bestimmbaren Geschwindigkeit senkrecht zur Förderrichtung bewegt wird. Dabei kommt es nur darauf an, daß diese periodische Drehbewegung eine senkrechte Komponente zur Förderrichtung erfährt oder direkt senkrecht zur Förderrichtung verläuft. Dadurch muß die Antriebseinrichtung im wesentlichen Trägheitskräfte aufbringen, die sich aus der Gesamtmasse des Fördersystems und der periodischen Beschleunigung ergeben. Desweiteren wirkt auf dieses Antriebssystem noch eine weitere Trägheitskraft, die "Coriolis-Kraft", die proportional dem Massenfluß und der Hubgeschwindigkeit ist.

Die Erfindung macht sich nun die mathematisch nachvollziehbare Erkenntnis zu Nutze, daß, wenn man die periodische Antriebskraft mit der periodischen Hubgeschwindigkeit des Fördersystems moduliert und dieses Ausgangssignal nachfolgend über der Zeit integriert, man ein Signal erhält, das der Förderrate proportional ist. Dies folgt in erster Linie aus der Erkenntnis, daß die Trägheitskräfte, die aus der Antriebsbeschleunigung herrühren, sich durch die Integration über eine ganze Anzahl von Perioden des Ausgangssingals aufheben. Die Trägheitskräfte, die aus der Antriebsgeschwindigkeit herrühren (Coriolis-Kraft), ergeben bei der Integration des Ausgangssignals über eine ganze Anzahl von Perioden einen Wert, der der Förderstärke entspricht.

Die Erfindung hat den Vorteil, daß sie leicht in Fördersysteme von Massengütern integriert werden kann. Dabei gehören zu den Massengütern insbesondere Schüttgüter und Flüssigkeiten. So ist sie z. b. bei einem Förderbandsystem als auch bei einer Rutsche für Schüttgüter einsetzbar. Es ist deshalb lediglich erforderlich, aus einem solchen Fördersystem einen bestimmten Teil mit einem Antrieb quer zur Förderrichtung zu versehen und die entsprechende Hubkraft und Hubgeschwindigkeit zu erfassen. Daher ist es auch leicht möglich, vorhandene Fördervorrichtungen mit einem derartigen Meßsystem nachzurüsten.

Insbesondere weist die Erfindung noch den Vorteil auf, daß die gewonnenen Meßsignale so miteinander verknüpft werden können, daß das Ausgangssignal nicht von dem Taragewicht des Systems beeinflußt werden kann und daher direkt der Förderstärke proportional ist. Deshalb ist es auch unbeachtlich, wenn sich das Taragewicht des Fördersystems im Laufe der Meßdauer z.B. durch Schmutz- oder Meßgutrückstände verändert.

Darüber hinaus ist es bei dem Meßsystem nach der beschriebenen Erfindung auch nicht erforderlich, dies auf ein bestimmtes Fördersystem abzustimmen oder gar besondere Fördervorrichtungen dafür zu schaffen. Denn die Trägheitskräfte, die proportional der Gesamtmasse der Fördereinrichtung und der Beschleunigung sind, heben sich für das Wägeergebnis durch die periodische Hubbewegung dadurch auf, daß die Messung während einer ganzzahligen Periodendauer durchgeführt wird.

Eine vorteilhafte Ausgestaltung der Erfindung ergibt sich auch dadurch, daß das Meßverfahren an fast allen beliebigen linearen Fördersystemen für Schüttgüter und Flüssigkeiten durchführbar ist. Da das Meßverfahren in nahezu jedes lineare Fördersystem integrierbar ist, wird deshalb in der Regel auch kein separater Antrieb für die Massengutbeförderung erforderlich, so daß sowohl die Förderstärke für flüssige als auch für feste Massengüter ermittelt werden kann. Eine derartige Meßeinrichtung gestattet deshalb auch die Ausnutzung der Schwerkraft zur Massengutbeförderung. Deshalb ist es auch möglich, nur mit einem energiesparenden Hubantrieb auszukommen.

In einer weiteren vorteilhaften Ausgestaltung der Erfindung ist der Drehpunkt als Federgelenk ausgebildet. Die Verwendung eines Federgelenks hat neben der Verschleißfreiheit den Vorteil, daß bei geeigneter Auswahl der Federsteifigkeit und bei sinusförmiger Hubbeschleunigung sich die Trägheitskräfte, die der Beschleunigung proportional sind, gegen die Federkräfte, die der Auslenkung proportional sind, aufheben. Dabei muß die Kraftmeßeinrichtung nur die Kräfte aufnehmen, die der Hubgeschwindigkeit proportional sind.

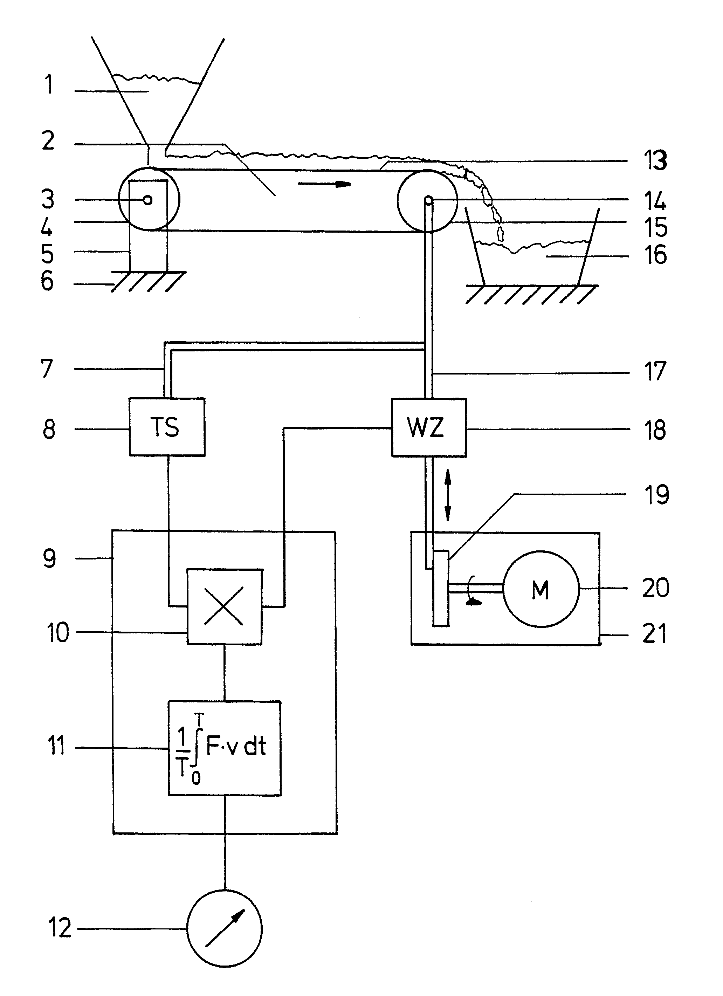

Die Erfindung wird anhand eines Ausführungsbeispiels, das in der Zeichnung dargestellt ist, näher erläutert.

In der Zeichnung ist eine schematische Anordnung einer Meßeinrichtung zur Förderstärkenermittlung von Massengütern in Form von Schüttgütern dargestellt. Zu den Massengütern gehören aber insbesondere auch Flüssigkeiten. Die Meßeinrichtung besteht im wesentlichen aus einer Fördervorrichtung 2, die durch eine Antriebsvorrichtung 21 periodisch um einen Drehpunkt bewegt wird. Der Drehpunkt ist als Drehachse 3 ausgebildet. Dabei werden durch Gebervorrichtungen 18, 8 die Hubkraft und die Hubgeschwindigkeit erfaßt und diese Signale einer Auswerteeinrichtung 9 zugeführt. Die Auswerteeinrichtung 9 ermittelt daraus die Förderstärke, die in einer Anzeigeeinrichtung 12 anzeigbar ist.

Die Fördervorrichtung 2 ist als Förderband 13 dargestellt, das durch einen nicht dargestellten Motor kontinuierlich angetrieben wird. Durch einen Vorratsbunker 1 gelangt fortlaufend ein darin befindliches Massengut auf das Förderband 13 und wird über eine bestimmte Strecke horizontal in einen Verbrauchsbehälter 16 befördert. Als Massengut ist ein Schüttgut dargestellt, auf dessen Zusammensetzung oder Ausbildung es nicht ankommt. Die Fördervorrichtung 2 könnte aber auch als horizontal geneigte Rinne oder Rutsche ausgebildet sein. Bei der Ausbildung der Fördervorrichtung 2 kommt es in erster Linie auf das zu befördernde Massengut an. Für die Erfindung ist es allerdings notwendig, daß es sich um eine Fördervorrichtung 2 handelt, die senkrecht zur Förderrichtung periodisch bewegbar ist. Dabei ist es auch gleichgültig, ob es sich um eine Fördervorrichtung 2 für feste oder flüssige Massengüter handelt. Die Fördervorrichtung 2 muß nur so beschaffen sein, daß sich die einzelnen Massenteile während des Fördervorganges nicht in senkrechter Richtung zur Förderrichtung bewegen können, weil das das Wägeergebnis verfälschen würde. Andererseits kann die Förderrichtung auch senkrecht verlaufen. Dabei ist allerdings wieder notwendig, daß das Fördergut der periodischen Bewegung der Fördervorrichtung folgt.

Das Förderband 13 ist an der Antriebs- oder der Materialzuführseite drehbar gelagert und kann dadurch gegenüber seiner horizontalen Förderrichtung geschwenkt werden. Die Drehachse 3 ist mit einer festen Abstützung 5 zu einem tragenden Bau- oder Geräteteil 6 verbunden. An der Materialabführseite des Förderbandes 13 ist dieses durch ein Pleuelgestänge 17 mit einer Antriebsvorrichtung 21 verbunden. Das Pleuelgestänge 17 ist an der Achse 14 einer zweiten Umlenkrolle 15 des Förderbandes 13 befestigt und bildet die Abstützung des Förderbandes 13. Eine erste Umlenkrolle 4 befindet sich an der festen Abstützung 5. Beide Umlenkrollen 4, 15 des Förderbandes 13 besitzen einen bestimmten Abstand voneinander, der lediglich von den konstruktiven Gegebenheiten abhängt und prinzipiell eine beliebige Länge besitzen kann. Das Pleuelgestänge 17 ist vertikal nach unten gerichtet und an einem Exzenterantrieb 19 befestigt.

Der Exzenterantrieb 19 ist mit der Antriebswelle eines Elektromotors 20 verbunden, mit der das Pleuelgestänge 17 mit einem bestimmten Hub senkrecht zur Förderrichtung bewegbar ist. Es ist aber auch ein anderer Hubantrieb denkbar. So könnten Vertikalbewegungen auch direkt durch einen elektromagnetischen Antrieb erfolgen, der das Förderband 13 im Rhythmus seines sinusförmigen Anzugstroms mit einem bestimmten Hubweg bewegt. Die Hubbewegung könnte aber auch rein mechanisch über einen direkten Nockenzapfen gesteuert werden. Der Antrieb könnte aber auch schräg zur Förderrichtung erfolgen. Dann wäre es aber erforderlich, den senkrechten Anteil zur Förderrichtung zu ermitteln oder zu errechnen, da nur dieser zur Meßwertermittlung verwertbar ist.

Das Pleuelgestänge 17 ist zweiteilig ausgebildet und stützt sich etwa in der Mitte auf die Kraftmeßvorrichtung 18 ab, die als Wägezelle ausgebildet ist. Diese erzeugt ein Signal, das der Hubkraft proportional ist und das Hubkraftsignal darstellt. Als Wägezelle 18 wird zweckmäßigerweise eine von einer Versorgungsspannung gespeiste Meßbrücke aus Dehnungsmeßstreifen verwendet, die ein der Hubkraft proportionales elektrisches Signal liefert. Prinzipiell können zur Hubkraftermittlung alle handelsüblichen Kraftsensoren verwendet werden, die ein entsprechendes elektrisches Signal erzeugen.

Mit dem Pleuelgestänge 17 ist noch ein Gestänge 7 verbunden, das die Hubbewegung auf eine Sensorvorrichtung 8 überträgt. Die Sensorvorrichtung 8 erzeugt aus der periodischen Hubbewegung am Pleuelgestänge 17 ein elektrisches Signal, das einen Wert liefert, der der Hubgeschwindigkeit entspricht und das Hubgeschwindigkeitssingal darstellt.

Die Sensorvorrichtung 8 könnte auch an anderer Stelle mit der bewegbaren Fördervorrichtung 2 verbunden sein. Dabei wäre es auch denkbar, das Hubgeschwindigkeitssignal durch eine Sensorrichtung direkt an der Antriebswelle des Antriebes 20 abzunehmen. Die Kraftmeßvorrichtung 18 könnte auch kraftschlüssig zwischen der Abstützung 5 und dem tragenden Geräteteil 6 bzw. zwischen der Drehachse 3 und der Abstützung 5 angeordnet werden.

Sowohl die Wägezelle 18 als auch die Sensorvorrichtung 8 sind ausgangsseitig mit der Auswerteeinrichtung 9 verbunden. Die Auswerteeinrichtung 9 stellt eine elektrische Schaltung dar, die die von Wägezelle 18 und der Sensorvorrichtung 8 gelieferten elektrischen Signale in ein der Förderstärke proportionales Ausgangssignal umwandelt. Dazu werden die von der Sensoreinrichtung 8 und der Wägezelle 18 gelieferten elektrischen Signale zunächst einem Multiplizierglied zugeführt, das als Multiplizierschaltung 10 ausgebildet ist.

Das Multiplizierglied 10 kann dadurch sehr einfach realisiert werden, daß die Ausgangsspannung der Sensorvorrichtung 8 als Versorgungsspannung der Wägezelle verwendet wird. Dabei könnte die Kraftmeßvorrichtung und die Sensorvorrichtung als integriertes Bauteil eingesetzt werden. Dadurch ist ein separates Multiplizierglied und die sonst nötige Spannungsquelle zur Versorgung der Wägezelle entbehrlich.

Die Multiplizierschaltung 10 bildet aus den periodischen Signalen, die im Idealfall einen sinusförmigen Verlauf aufweisen, ein moduliertes Signal, das dem einer Amplitudenmodulation entspricht. Dieses modulierte Signal wird nachfolgend einem Integrierglied 11 zugeführt, das als Filter- und Integrierschaltung ausgebildet ist. Dieses Integrierglied 11 separiert das modulierte Signal und integriert deren Anteile über ganzzahlige Perioden und bildet daraus einen Mittelwert, der als Ausgangssignal einer Anzeigeeinrichtung 12 zugeführt wird. Dieses Ausgangssignal kann in der Auswerteschaltung 9 auch noch durch verschiedene Rechen- und Verstärkerschaltungen umgewandelt werden, so daß eine Anzeige direkt in den gewünschten Einheiten vorliegt.

Der durch die Integrierschaltung 11 erzeugte Signalverlauf kann aber auch gleichzeitig einer Steuer- oder Regeleinrichtung zugeführt werden. Hierdurch wäre es möglich, die gewünschte Förderstärke selbsttätig zu regeln oder zu steuern.

Darüber hinaus ist es auch möglich, das Signal der Förderstärke in einer Summierschaltung aufzusummieren, um einen Wert für die Gesamtfördermasse zu erhalten.

## Ansprüche

1. Verfahren zum Bestimmen der Förderstärke von Massengütern, bei der die Massengüter über eine Fördervorrichtung transportiert werden, dadurch gekennzeichnet, daß die Fördervorrichtung (2) oder ein Teil der Fördervorrichtung (2) mit einem bestimmbaren Hub bewegt wird, der eine senkrechte Bewegungskomponent zum Massengüterstrom aufweist, wobei die Hubkraft und die Hubgeschwindigkeit ermittelt und daraus ein Wert errechnet wird, der der Förderstärke proportional ist.

2. Meßeinrichtung zur Durchführung des Verfahrens nach Anspruch 1, gekennzeichnet durch folgende Merkmale:

a) die Fördervorrichtung (2) oder ein Teil der Fördervorrichtung (2) ist mit einer Antriebseinrichtung (21) versehen, die die Fördervorrichtung (2) mit einem bestimmbaren Hub bewegt, wobei der Hub eine senkrechte Bewegungskomponente zur Förderrichtung (2) aufweist,

b) es ist eine Kraftmeßvorrichtung (18) vorgesehen, die ein Hubkraftsignal erzeugt, das der Hubkraft proportional ist;

    c) es ist eine Sensorvorrichtung (8) vorgesehen, die ein Hubgeschwindigkeitssignal erzeugt, das der Hubgeschwindigkeit proportional ist;

    d) die Meßeinrichtung enthält eine Auswerteeinrichtung (9), die aus dem Hubkraftsignal und dem Hubgeschwindigkeitssignal ein Ausgangssignal bildet, das der Förderstärke der Fördervorrichtung (2) proportional ist.

3. Meßeinrichtung nach Anspruch 2, dadurch gekennzeichnet, daß in der Auswerteeinrichtung (9) ein Multiplizierglied (10) vorgesehen ist, das aus dem fortlaufenden Hubkraft- und Hubgeschwindigkeitssignal ein moduliertes Signal bildet.

4. Meßeinrichtung nach Anspruch 3, dadurch gekennzeichnet, daß die Auswerteeinrichtung (9) ein Integrierglied (11) enthält, das das modulierte Signal über mindestens eine Hubperiode integriert und daraus das Ausgangssignal bildet.

5. Meßeinrichtung nach Anspruch 4, dadurch gekennzeichnet, daß die Fördervorrichtung (2) um einen Drehpunkt (3) gelagert angeordnet ist und um diesen Drehpunkt (3) hubartig bewegbar ist.

6. Meßeinrichtung nach Anspruch 5, dadurch gekennzeichnet, daß der Drehpunkt 3 als Drehachse oder als Federgelenk ausgebildet ist.

7. Meßeinrichtung nach Anspruch 6, dadurch gekennzeichnet, daß die Fördervorrichtung (2) als Förderband (13) oder als gegen die Horizontale geneigte Förderrutsche ausgebildet ist.

8. Meßeinrichtung nach Anspruch 7, dadurch gekennzeichnet, daß die Antriebsvorrichtung (21) als Elektromotor (20) ausgebildet ist, dessen Antriebswelle mit einem Exzenterantrieb (19) verbunden ist, an der ein Pleuelgestänge (17) befestigt ist, das gleichfalls mit der Fördervorrichtung (2) verbunden ist.

9. Meßeinrichtung nach Anspruch 8, dadurch gekennzeichnet, daß die Kraftmeßvorrichtung zur Bestimmung der Hubkraft zwischen Drehachse (3) und Abstützung (5) angeordnet ist.

10. Meßeinrichtung nach Anspruch 9, dadurch gekennzeichnet, daß die Kraftmeßvorrichtung aus einer Wägezelle (18) besteht, die kraftschlüssig zwischen der Antriebseinrichtung (21) und der Fördervorrichtung (2) angeordnet ist.

11. Meßeinrichtung nach Anspruch 10, dadurch gekennzeichnet, daß die Kraftmeßvorrichtung (18) und die Sensorvorrichtung (8) als integriertes Bauteil ausgebildet sind.

12. Meßeinrichtung nach Anspruch 11, dadurch gekennzeichnet, daß die Sensoreinrichtung (8) als Tauchspulenaufnehmer ausgebildet ist, der mit der beweglichen Seite der Fördervorrichtung (2) verbunden ist.

13. Meßeinrichtung nach Anspruch 12, dadurch gekennzeichnet, daß die Förderrutsche mit parallel zur Förderrichtung angeordneten Leitmitteln versehen ist, die so ausgebildet sind, daß sie eine Bewegung der Massengüter in Hubrichtung verhindern.

14. Meßeinrichtung nach Anspruch 13, dadurch gekennzeichnet, daß die Auswerteeinrichtung (9) so ausgebildet ist, daß die in bestimmbarem zeitlichen Abstand ohne Massenfluß gemessene Förderstärke als Fehlersignal erfaßbar und speicherbar ist und zur Korrektur der gemessenen Förderstärke dient.